# EUROPÄISCHE PATENTSCHRIFT

(11) **EP 3 934 960 B1**
(45) Veröffentlichungstag und Bekanntmachung des Hinweises auf die Patenterteilung: **20.12.2023**
(21) Anmeldenummer: 20718242.9
(22) Anmeldetag: 02.04.2020
(51) Int. Cl.: B61F 5/22, B60G 17/00

(54) **VORRICHTUNG UND VERFAHREN ZUR BESTIMMUNG VON ABSTÄNDEN ZWISCHEN WAGENKÄSTEN UND FAHRWERKEN VON FAHRZEUGEN**
DEVICE AND METHOD FOR DETERMINING DISTANCES BETWEEN THE VEHICLE BODIES AND CHASSIS OF VEHICLES
DISPOSITIF ET PROCÉDÉ SERVANT À DÉFINIR DES ESPACEMENTS ENTRE DES CAISSES DE VOITURE ET DES TRAINS DE ROULEMENT DE VÉHICULES

(30) Priorität: 10.04.2019 AT 503222019
(43) Veröffentlichungstag der Anmeldung: 12.01.2022
(73) Patentinhaber: Siemens Mobility Austria GmbH, 1210 Wien (AT)
(72) Erfinder: FRIEDRICH, Barbara, 8403 Lebring-Sankt Margarethen (AT)
(74) Vertreter: Siemens Patent Attorneys
(86) Internationale Anmeldenummer: PCT/EP2020/059397
(87) Internationale Veröffentlichungsnummer: WO 2020/207896

(56) Entgegenhaltungen:
- DE-A1- 3 446 411
- DE-A1- 19 647 998
- DE-A1- 19 918 404
- JP-A- S5 539 810

## Beschreibung

Die Erfindung betrifft eine Vorrichtung und ein Verfahren zur Bestimmung von Abständen zwischen zumindest einem Wagenkasten und zumindest einem Fahrwerk eines Fahrzeugs, insbesondere eines Schienenfahrzeugs.

Eine präzise Bestimmung von Abständen zwischen Wagenkästen und Fahrwerken von Fahrzeugen, insbesondere von Schienenfahrzeugen, ist wichtig, um einerseits Fahrzeuglasten bzw. -Massen oder Beladungszustände erfassen zu können und andererseits eine effektive Niveauregulierung zur Anpassung von Fahrzeugeinstiegen an Bahnsteige (z.B. bei Niederflurfahrzeugen) durchführen zu können.

Eine genaue Lastbestimmung ist beispielsweise bedeutsam, um das Fahrzeug im richtigen Ausmaß abbremsen zu können, d.h. nicht zu wenig Bremsmoment auf Räder aufzubringen und nicht zu viel.

Beispielsweise stellen sich in einem Reisezugwagen oder einem Triebzug aufhaltende Passagiere Lasten dar, die auf Fahrwerke und Räder wirken. Diese Lasten weisen bestimmte Größen und bestimmte Verteilungen über das Fahrzeug auf.

Ebenso wirkt eine Fracht eines Güterwagens als Last auf Fahrwerke und Räder bzw. Radsätze des Fahrzeugs.

Zur Einstellung von Bremsdrücken eines Druckluftbremssystems werden häufig Lastbremsventile eingesetzt. Diese Lastbremsventile sind häufig mit als Luftfedern ausgebildeten Sekundärfederanordnungen sowie mit Bremszylindern verbunden. In Abhängigkeit eines Luftdrucks in den Luftfedern werden mittels des Lastbremsventils Bremszylinderdrücke eingestellt. Dadurch werden lastabhängige Bremsungen erzielt.

Aus dem Stand der Technik ist beispielsweise die WO 2019/016206 A1 bekannt. Darin ist eine Vorrichtung und ein Verfahren zur Lastbestimmung bei Fahrzeugen beschrieben, für welche ein spezieller Luftbalg mit einem Drucksensor und einem Beschleunigungssensor zwischen einem Wagenkasten und einem Fahrwerk eines Fahrzeugs angeordnet ist. Zur Bestimmung von Fahrzeuglasten aus Luftdrücken und Beschleunigungen sind der Drucksensor und der Beschleunigungssensor mit einer Recheneinheit in dem Wagenkasten verbunden.

Dieser Ansatz weist in seiner bekannten Form den Nachteil auf, dass zwar eine dedizierte Anordnung zur Lastbestimmung vorgesehen ist, diese jedoch ein Druckluftsystem erfordert.

Aus dem Stand der Technik ist weiterhin die DE 199 18 404 A1 bekannt, welche einen Höhensensor mit einer Erregerspule zur Erzeugung eines Wechselmagnetfelds und einer Aufnahmespule zur Detektion des Wechselmagnetfelds zeigt, über welche eine Entfernung zwischen der Erregerspule und der Aufnahmespule aus einer von der Aufnahmespule ausgegebenen Spannung ermittelt wird. Die Erregerspule ist mit einem Gestänge einer Federungsanordnung eines Fahrzeugs verbunden, die Aufnahmespule mit einem Körper des Fahrzeugs.

Ferner offenbart die DE 34 46 411 A1 eine Sensoreinrichtung zur Bestimmung von Relativpositionen zwischen zwei Komponenten eines Federbeins, die zu- bzw. gegeneinander relativbeweglich sind. Die Sensoreinrichtung umfasst Permanentmagneten, welche magnetische Felder erzeugen, und Hallsensoren, welche auf Änderungen der Magnetfelder reagieren.

Weiterhin ist in der DE 196 47 998 A1 eine Luftfeder eines Schienenfahrzeugs beschrieben, wobei mittels eines Höhengebers Höhenlagen eines Fahrzeugaufbaus des Schienenfahrzeus über einer Schienenoberkante bestimmt werden. Der Höhengeber, welcher als Winkelgeber ausgeführt sein kann, ist zwischen dem Fahrzeugaufbau und einem Fahrwerk des Schienenfahrzeugs angeordnet.

Der Erfindung liegt die Aufgabe zugrunde, eine gegenüber dem Stand der Technik weiterentwickelte Vorrichtung anzugeben, welche einerseits universell, d.h. auch für Fahrzeuge ohne Druckluftsystem einsetzbar ist und welche andererseits auch bei eingeschränkten Bauraumverhältnissen in einem Fahrzeug angeordnet werden kann.

Erfindungsgemäß wird diese Aufgabe gelöst mit einer Vorrichtung nach Anspruch 1.

Dadurch wird eine druckluftfreie Lastbestimmung auf Grundlage von mittels der erfindungsgemäßen Vorrichtung bestimmten Abständen zwischen dem Wagenkasten und dem Fahrwerk ermöglicht, es kann daher auf Luftdruckmessungen zur Lastbestimmung (beispielsweise mittels eines Drucksensors über eine als Luftfeder ausgebildete Sekundärfeder) verzichtet werden.

Die erfindungsgemäße Vorrichtung kann daher auch in Fahrzeugen eingesetzt werden, welche kein Druckluftsystem aufweisen.

Über das Gestänge ist ein Distanzausgleich bzw. ein Einsatz für und eine Anpassbarkeit an verschiedene Bauraumgeometrien möglich, wodurch auch eine Nachrüstung von Fahrzeugen mit der erfindungsgemäßen Vorrichtung denkbar ist.

Ein weiterer Vorteil der erfindungsgemäßen Vorrichtung ist die geringe Anzahl an Bauteilen. Je Fahrwerk sind lediglich ein Gestänge und ein Inkrementalgeber erforderlich, welche eine signalleitende Verbindung zu der Recheneinheit aufweisen. Dadurch wird eine geringe Komplexität sowie eine Einsetzbarkeit der erfindungsgemäßen Vorrichtung auch bei beengten Bauraumverhältnissen erzielt.

Erfindungsgemäß ist es jedoch auch denkbar, beispielsweise aus Redundanzgründen, mehr als ein Gestänge, mehr als einen Inkrementalgeber und/oder mehr als eine Recheneinheit vorzusehen.

Weiterhin können mittels der erfindungsgemäßen Vorrichtung auch Eingangsgrößen für eine Einrichtung zur Niveauregulierung des Fahrzeugs gebildet und an diese Einrichtung übertragen werden.

Es ist günstig, wenn das zumindest eine Gestänge als Luftfedergestänge ausgebildet ist.

Durch diese Maßnahme wird eine konstruktive Vereinfachung und eine Verringerung des Bauraumbedarfs für die erfindungsgemäße Vorrichtung bei Fahrzeugen mit Luftfedern erzielt. Auf ein separates Gestänge für die erfindungsgemäße Vorrichtung kann verzichtet werden.

Eine vorteilhafte Ausgestaltung erhält man, wenn das zumindest eine Gestänge gelenkig und schwenkbar mit dem zumindest einen Wagenkasten und dem zumindest einen Fahrwerk verbindbar ist.

Durch diese Maßnahme wird ein permanenter Distanzausgleich zwischen dem Wagenkasten und dem Fahrwerk erzielt. Die erfindungsgemäße Vorrichtung schränkt Relativbewegungen zwischen dem Wagenkasten und dem Fahrwerk nur unwesentlich ein.

Erfindungsgemäß ist mit dem zumindest einen Gestänge und mit der zumindest einen Recheneinheit zumindest ein Beschleunigungssensor verbunden.

Durch diese Maßnahme können mittels des Inkrementalgebers und der Recheneinheit bestimmte Abstände um dynamische Störungen aus Relativbewegungen zwischen dem Wagenkasten und dem Fahrwerk korrigiert werden.

Weiterhin ist es hilfreich, wenn mittels des zumindest einen Inkrementalgebers erste Messungen durchgeführt werden, entsprechende Messsignale an die zumindest eine Recheneinheit übertragen werden und aus den Messsignalen Abstände zwischen dem zumindest einen Wagenkasten und dem zumindest einen Fahrwerk ermittelt werden.

Dabei ist es günstig, wenn in der zumindest einen Recheneinheit aus den Abständen sowie einer Steifigkeit einer Federanordnung des Fahrzeugs Massen des Fahrzeugs bestimmt werden und/oder wenn mittels der in der zumindest einen Recheneinheit ermittelten Abstände eine Niveauregulierung des Fahrzeugs durchgeführt wird.

Auf Grundlage der ermittelten Abstände kann demnach neben einer Massen- bzw. Lastbestimmung auch eine Regelung eines erforderlichen Wagenkastenniveaus durchgeführt werden. Die erfindungsgemäße Vorrichtung ist also flexibel, d.h. nicht auf eine Bestimmung von Fahrzeugmassen bzw. -Lasten oder eine Niveauregulierung beschränkt.

Es ist ferner günstig, wenn mittels des zumindest einen Beschleunigungssensors Beschleunigungen des zumindest einen Gestänges gemessen werden, Beschleunigungssignale an die zumindest eine Recheneinheit übertragen werden und aus den Beschleunigungen Abstandsanteile ermittelt werden, um welche die ermittelten Abstände korrigiert werden.

Durch diese Maßnahme wird eine erhöhte Genauigkeit bei der Massen- bzw. Lastbestimmung und/oder der Niveauregulierung bewirkt.

Nachfolgend wird die Erfindung anhand von Ausführungsbeispielen näher erläutert.

Es zeigen beispielhaft:
- Fig. 1:: Eine schematische Darstellung eines Schienenfahrzeugs mit einem ersten Wagen, einem zweiten Wagen und einem dritten Wagen und einer Stahlfederanordnung, wobei zwischen einem Wagenkasten und einem Fahrwerk eine erste beispielhafte Ausführungsvariante einer erfindungsgemäßen Vorrichtung zur Bestimmung von Abständen angeordnet ist,
- Fig. 2:: Eine schematische Darstellung einer zweiten beispielhaften Ausführungsvariante einer erfindungsgemäßen Vorrichtung zur Bestimmung von Abständen, wobei ein Gestänge der Vorrichtung als Luftfedergestänge eines Schienenfahrzeugs ausgebildet ist, und
- Fig. 3:: Ein Flussdiagramm zu einer beispielhaften Ausführungsvariante eines erfindungsgemäßen Verfahrens zur Bestimmung von Abständen.

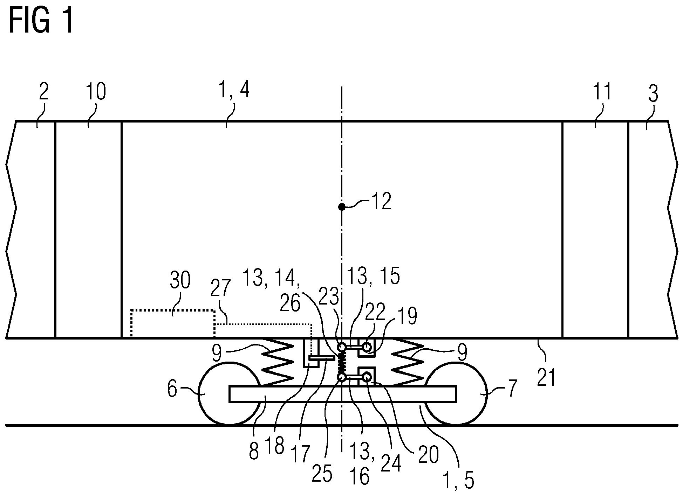

Fig. 1 zeigt ein schematisch und ausschnittsweise dargestelltes Schienenfahrzeug mit einem ersten Wagen 1, der einen Wagenkasten 4 und ein Fahrwerk 5 umfasst. Das Fahrwerk 5 weist ein erstes Räderpaar 6, ein zweites Räderpaar 7 sowie einen Fahrwerksrahmen 8 auf und ist unterhalb des Wagenkastens 4 angeordnet. Zwischen dem Fahrwerk 5 und dem Wagenkasten 4 ist eine Sekundärfederanordnung 9 mit Schraubendruckfedern aus Stahl vorgesehen, die auf dem Fahrwerksrahmen 8 gelagert ist.

Ein erster Wagenübergang 10 verbindet den ersten Wagen 1 mit einem zweiten Wagen 2, ein zweiter Wagenübergang 11 den ersten Wagen 1 mit einem dritten Wagen 3.

In Fig. 1 ist ein Zustand des Schienenfahrzeugs dargestellt, bei dem sich dieses in Stillstand auf einer horizontalen Ebene befindet.

Der Wagenkasten 4 weist eine Wagenkastenhochachse auf, das Fahrwerk 5 eine Fahrwerkshochachse. Die Wagenkastenhochachse und die Fahrwerkshochachse verlaufen im gezeigten Zustand des Schienenfahrzeugs ineinander, sind parallel zueinander ausgerichtet und in Fig. 1 als Wagenhochachse 12 dargestellt. Ein Gesamtschwerpunkt des ersten Wagens 1 liegt, im dargestellten Zustand des Schienenfahrzeugs, horizontal gleich positioniert wie ein Wagenkastenschwerpunkt und ein Fahrwerksschwerpunkt, auf dieser Wagenhochachse 12.

Zwischen dem Wagenkasten 4 und dem Fahrwerk 5 ist eine erste beispielhafte Ausführungsvariante einer Vorrichtung zur Bestimmung von Abständen angeordnet, welche ein Gestänge 13 mit einer Stange 14, einem ersten Hebel 15 und einem zweiten Hebel 16 sowie einen als optoelektronischen Sensor ausgeführten Inkrementalgeber 17 aufweist.

Das Gestänge 13 ist ausschließlich zur Bestimmung von Abständen zwischen dem Wagenkasten 4 und dem Fahrwerk 5 vorgesehen, d.h. es weist sonst keine weiteren Funktionen auf.

Der Inkrementalgeber 17 ist in einer ersten Konsole 18, die mit einer Bodenplatte 21 des Wagenkastens 4 verschweißt ist, gelagert.

Der erste Hebel 15 ist über ein erstes Gelenk 22 mit einer mit der Bodenplatte 21 verschweißten zweiten Konsole 19 sowie über ein zweites Gelenk 23 mit der Stange 14 verbunden.

Der zweite Hebel 16 ist über ein drittes Gelenk 24 mit einer mit dem Fahrwerksrahmen 8 verschweißten dritten Konsole 20 sowie über ein viertes Gelenk 25 mit der Stange 14 verbunden. Das Gestänge 13 ist demnach gelenkig und schwenkbar mit dem Wagenkasten 4 sowie mit dem Fahrwerk 5 verbunden.

Auf der Stange 14 ist eine als hell/dunkel-Raster ausgebildete Maßverkörperung 26 vorgesehen.

Der Inkrementalgeber 17 bzw. dessen Messsonde ist zu dieser Maßverkörperung 26 hin ausgerichtet und wandelt detektierte hell/dunkel-Lichtimpulse des Rasters auf Grundlage eines bekannten fotoelektrischen Effekts in elektrische Signale um. Die elektrischen Signale werden über eine erste Leitung 27, über welche der Inkrementalgeber 17 signal- und stromleitend mit einer in dem Wagenkasten 4 angeordneten bzw. damit verbundenen Recheneinheit 30 verbunden ist, an die Recheneinheit 30 übermittelt.

Die Recheneinheit 30 ist über ein nicht gezeigtes Bord-Stromnetz des Schienenfahrzeugs mit Elektrizität versorgt. Über die erste Leitung 27 wird der Inkrementalgeber 17 von der Recheneinheit 30 mit Elektrizität versorgt. Erfindungsgemäß ist es auch denkbar, die Recheneinheit 30 mit dem Fahrwerk 5 zu verbinden, wobei diese z.B. auf dem Fahrwerksrahmen 8 angeordnet sein kann.

Weiterhin ist es vorstellbar, den Inkrementalgeber 17 anstatt mit dem Wagenkasten 4 mit dem Fahrwerk 5 zu verbinden, d.h. z.B. auf dem Fahrwerksrahmen 8 anzuordnen.

In der Recheneinheit 30 werden die elektrischen Signale mittels Impulszählungen in Abstände zwischen dem Wagenkasten 4 und dem Fahrwerk 5, d.h. in einen Sekundärfederweg umgewandelt. Über eine in der Recheneinheit 30 gespeicherte Federsteifigkeit der Sekundärfederanordnung 9 wird mittels der Recheneinheit 30 eine Federkraft bestimmt, über die Federkraft und die ebenfalls in der Recheneinheit 30 gespeicherte Erdbeschleunigung unter Anwendung eines bekannten Impulssatzes eine Last, oder, genaugenommen, eine Masse.

Die bestimmte Last bzw. Masse entspricht einer Beladung oder Beladungsänderungen des Schienenfahrzeugs, beispielsweise aufgrund von ein- oder aussteigenden Fahrgästen.

Abstände und Massen werden in der Recheneinheit 30 gespeichert.

In dem in Fig. 1 gezeigten Zustand verläuft die Stange 14 genau in der Wagenhochachse 12, auf welcher der Gesamtschwerpunkt des ersten Wagens 1 liegt. Hierbei handelt es sich um eine günstige Lösung, da so Schwerpunktbewegungen des ersten Wagens 1 erfasst und ausgewertet werden können. Erfindungsgemäß ist jedoch für das Gestänge 13 jede beliebige Position zwischen dem Wagenkasten 4 und dem Fahrwerk 5 denkbar. Es ist auch vorstellbar, mehr als eine erfindungsgemäße Vorrichtung zur Bestimmung von Abständen zwischen dem Wagenkasten 4 und dem Fahrwerk 5 anzuordnen und die von jeder der erfindungsgemäßen Vorrichtungen ermittelten Abstände auf eine spezifische Position zwischen dem Wagenkasten 4 und dem Fahrwerk 5 zu transformieren bzw. die Abstände zu mitteln. Entsprechende Schwerpunktabstände zwischen den erfindungsgemäßen Vorrichtungen und dem Gesamtschwerpunkt des ersten Wagens 1 sind hierzu in der Recheneinheit 30 gespeichert.

Zu der bestimmten Masse wird eine Eigenmasse des ersten Wagens 1 addiert, um eine Gesamtmasse des ersten Wagens 1 zu ermitteln. Die Eigenmasse bzw. entsprechende Eigenmasseninformationen sind in der Recheneinheit 30 gespeichert. Die Gesamtmasse bzw. entsprechende Gesamtmasseninformationen werden von der Recheneinheit 30 an ein nicht dargestelltes elektronisches Lastbremsventil des Schienenfahrzeugs geleitet und dort verarbeitet, um eine lastabhängige Bremsung des Schienenfahrzeugs zu gewährleisten.

Die Recheneinheit 30 ist in Fig. 1 als separate Recheneinheit 30 ausgeführt. Erfindungsgemäß ist es jedoch auch denkbar, dass es sich bei der Recheneinheit 30 um ein Fahr- und/oder Bremssteuergerät des Schienenfahrzeugs handelt.

Weiterhin ist es denkbar, den Inkrementalgeber 17 nicht als optoelektronischen Sensor, sondern als induktiven Sensor auszubilden.

Darüber hinaus ist es vorstellbar, nicht nur für den ersten Wagen 1 eine derartige Abstands- bzw. Lastbestimmung durchzuführen, sondern auch für den zweiten Wagen 2 und/oder den dritten Wagen 3, sofern diese entsprechende erfindungsgemäße Vorrichtungen zur Bestimmung von Abständen aufweisen.

Die erfindungsgemäße Vorrichtung ist selbstverständlich nicht nur für Schienenfahrzeuge anwendbar. Es kommt jedes Fahrzeug dafür in Betracht, welches einen Wagenkasten 4 bzw. eine Karosserie und ein Fahrwerk 5 aufweist, d.h. z.B. auch Lastkraftwagen, Busse und Personenkraftwagen etc.

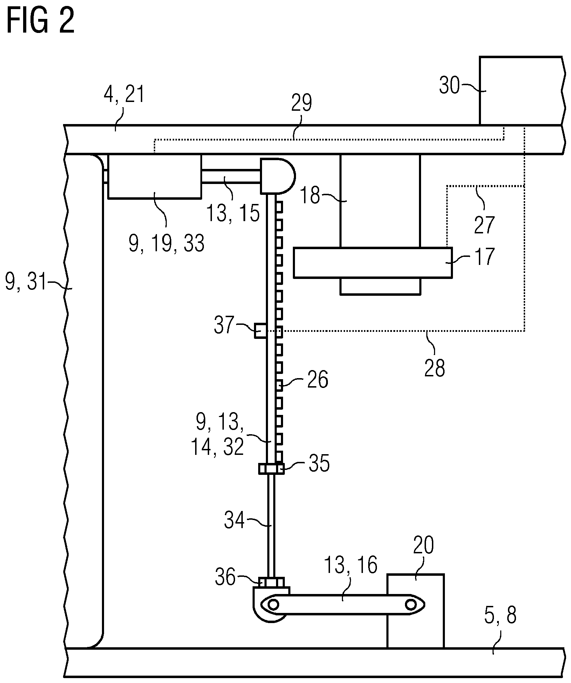

In Fig. 2 ist eine zweite beispielhafte Ausführungsvariante einer erfindungsgemäßen Vorrichtung zur Bestimmung von Abständen schematisch dargestellt.

Die genannte Vorrichtung ist zwischen einem Wagenkasten 4 und einem Fahrwerk 5 eines Schienenfahrzeugs vorgesehen, welches in Fig. 2 ausschnittsweise gezeigt ist.

Zwischen dem Wagenkasten 4 und dem Fahrwerk 5 ist eine Sekundärfederanordnung 9 vorgesehen, welche als Luftfederanordnung ausgeführt ist, die einen Luftfederbalg 31, ein Luftfedergestänge 32 und ein elektronisches Luftfederventil 33 aufweist.

Die zweite beispielhafte Ausführungsvariante einer erfindungsgemäßen Vorrichtung zur Bestimmung von Abständen weist einen als induktiven Sensor ausgeführten Inkrementalgeber 17 sowie ein Gestänge 13 mit einer gerasterten Maßverkörperung 26 auf.

Im Unterschied zu jener beispielhaften Ausführungsvariante einer erfindungsgemäßen Vorrichtung, die in Fig. 1 gezeigt ist und bei welcher das Gestänge 13 ausschließlich zur Bestimmung von Abständen vorgesehen ist, ist das Gestänge 13 in Fig. 2 als Luftfedergestänge 32 und somit als Teil der Sekundärfederanordnung 9 ausgebildet.

Der Inkrementalgeber 17 ist in einer ersten Konsole 18 gelagert, welche mit einer Bodenplatte 21 des Wagenkastens 4 verschweißt ist, und parallel zu der Bodenplatte 21 zu der Maßverkörperung 26 hin ausgerichtet.

Das Gestänge 13 weist eine Stange 14, auf welcher die Maßverkörperung 26 vorgesehen ist, sowie einen ersten Hebel 15 und einen zweiten Hebel 16 auf.

Der erste Hebel 15 ist mit dem Luftfederventil 33 verbunden, das in dieser zweiten beispielhaften Ausführungsvariante einer erfindungsgemäßen Vorrichtung zur Bestimmung von Abständen als zweite Konsole 19 fungiert.

Das Luftfederventil 33 ist wiederum mit der Bodenplatte 21 verbunden und pneumatisch mit dem Luftfederbalg 31 gekoppelt. Der zweite Hebel 16 ist in einer dritten Konsole 20 gelagert, die mit einem Fahrwerksrahmen 8 des Fahrwerks 5 verschweißt ist.

Das Gestänge 13 ist gelenkig und schwenkbar mit dem Wagenkasten 4 und dem Fahrwerk 5 verbunden. Es kann sich daher an verschiedene Relativpositionen zwischen dem Wagenkasten 4 und dem Fahrwerk 5 anpassen, d.h. ist mit Relativbewegungen zwischen dem Wagenkasten 4 und dem Fahrwerk 5 verträglich.

Die Stange 14 weist einen Gewindeabschnitt 34 sowie eine erste Mutter 35 und eine zweite Mutter 36 auf, über welche eine Länge der Stange 14 zur Montage des Gestänges 13 justiert werden kann.

Der Inkrementalgeber 17 weist eine mit Gleichstrom beaufschlagte Induktionsspule auf und registriert, aufgrund von Relativbewegungen zwischen dem Inkrementalgeber 17 und der Maßverkörperung 26, Magnetfeldänderungen auf der Maßverkörperung 26, welche in ferromagnetischem Material ausgebildet ist. Die Magnetfeldänderungen werden nach Polarität und Phasenlage ausgewertet, hierzu werden elektrische Signale über eine erste Leitung 27 von dem Inkrementalgeber 17 an eine Recheneinheit 30, welche in dem Wagenkasten 4 vorgesehen ist, geleitet.

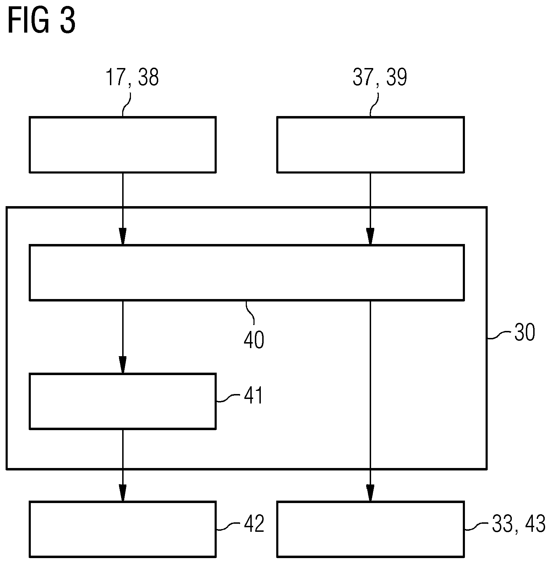

In der Recheneinheit 30 werden, wie im Zusammenhang mit Fig. 1 und Fig. 3 beschrieben, aus den Signalen des Inkrementalgebers 17 Abstände bzw. Sekundärfederwege zwischen dem Wagenkasten 4 und dem Fahrwerk 5, bei welchen sich es im Wesentlichen um Normalabstände handelt, ermittelt.

Auf der Stange 14 ist ein Beschleunigungssensor 37 angeordnet, welcher Beschleunigungen des Gestänges 13 misst und entsprechende Beschleunigungsinformationen über eine zweite Leitung 28 an die Recheneinheit 30 übermittelt. Diese Beschleunigungsinformationen werden in der Recheneinheit 30 mittels zweifacher zeitlicher Integration in Wege des Gestänges 13 in Fahrtrichtung des Schienenfahrzeugs sowie quer zu der Fahrtrichtung bzw. lateral transformiert. Diese Wege werden zusammen mit der Länge des Gestänges 13, welche in der Recheneinheit 30 gespeichert ist und eingestellt werden kann, über aus dem Stand der Technik bekannte Winkelfunktionen in Differenzabstände zwischen dem Wagenkasten 4 und dem Fahrwerk 5 transformiert. Bei diesen Differenzabständen handelt es sich, wie bei den Abständen selbst, im Wesentlichen um Normalabstände zwischen dem Wagenkasten 4 und dem Fahrwerk 5. Die Differenzabstände sind Abstandsanteile, welche nicht auf Federungsvorgänge aufgrund von Beladungsänderungen des Schienenfahrzeugs, sondern auf dynamische Vorgänge (Anfahren, Bremsen etc. des Schienenfahrzeugs) zurückzuführen sind.

Die Abstandsanteile werden zu den in der Recheneinheit 30 ermittelten Abständen addiert oder von diesen Abständen subtrahiert. Dadurch werden die Abstände um diese dynamischen Abstandsanteile korrigiert.

Die Abstände werden als Regelgrößen einer Einrichtung zur Niveauregulierung des Schienenfahrzeugs eingesetzt. Die Recheneinheit 30 fungiert in diesem Zusammenhang als Regler des Luftfederventils 33 und ist mit diesem über eine dritte Leitung 29 verbunden. Über die dritte Leitung 29 werden entsprechende Regelsignale übertragen, das Luftfederventil 33 stellt zur Erreichung eines Soll-Niveaus des Wagenkastens 4 entsprechende Luftdrücke in dem Luftfederbalg 31 ein.

Sind für die Niveauregulierung Absolutabstände zwischen Wagenkasten 4 und Fahrwerk 5 erforderlich, so sind in der Recheneinheit 30 Federwege einer statischen Einfederung gespeichert, welche zu den ermittelten Abständen addiert werden.

Sollen in die Niveauregulierung auch Primärfederwege einbezogen werden, so ist es möglich, auch zwischen dem Fahrwerksrahmen 8 und beispielsweise einem Radsatzlagergehäuse eine erfindungsgemäße Vorrichtung zur Bestimmung von Abständen anzuordnen und damit Federwege einer Primärfederanordnung, d.h. die Primärfederwege zu bestimmen.

Die erste Leitung 27, die zweite Leitung 28 und die dritte Leitung 29 sind signal- und stromleitend ausgeführt. Die Recheneinheit 30 ist über ein nicht gezeigtes Bordnetz des Schienenfahrzeugs mit Elektrizität versorgt. Der Inkrementalgeber 17, der Beschleunigungssensor 37 sowie das Luftfederventil 33 sind wiederum über die Recheneinheit 30 sowie über die erste Leitung 27, die zweite Leitung 28 und die dritte Leitung 29 mit Elektrizität versorgt. Erfindungsgemäß ist es jedoch auch möglich, dass der Inkrementalgeber 17, der Beschleunigungssensor 37 sowie das Luftfederventil 33 jeweils eine eigene Stromversorgung aufweisen.

Fig. 3 zeigt eine beispielhafte Ausführungsvariante eines erfindungsgemäßen, teilweise computerimplementierten Verfahrens zur Bestimmung von Abständen zwischen Wagenkästen 4 und Fahrwerken 5 von Fahrzeugen für erfindungsgemäße Vorrichtungen, wie sie z.B. in Fig. 1 bzw. in Fig. 2 dargestellt sind. Es werden daher in Fig. 3 teilweise gleiche Bezugszeichen wie in Fig. 1 und Fig. 2 verwendet.

Mittels eines als induktiver Sensor ausgeführten Inkrementalgebers 17 werden erste Messungen 38 durchgeführt. Der Inkrementalgeber 17 weist eine mit Gleichstrom beaufschlagte Induktionsspule auf und registriert Magnetfeldänderungen auf einer in Fig. 2 gezeigten Maßverkörperung 26 auf einem Gestänge 13, welche in ferromagnetischem Material ausgebildet ist. Die Magnetfeldänderungen werden nach Polarität und Phasenlage ausgewertet, hierzu werden elektrische Signale als Messsignale an eine Recheneinheit 30 in einem Wagenkasten 4 übertragen.

Aus den Messsignalen bzw. aus Zählung der Messignale, Addierung entsprechender Inkremente und Multiplizierung einer Inkrementensumme mit einer in der Recheneinheit 30 gespeicherten Länge je Inkrement werden Abstände zwischen dem Wagenkasten 4 und einem Fahrwerk 5 eines Schienenfahrzeugs ermittelt (Abstandsermittlung 40), bei welchen es sich im Wesentlichen um Normalabstände handelt.

Aus den Abständen werden, wie im Zusammenhang mit Fig. 1 erläutert, Massen des Schienenfahrzeugs zur Übermittlung an ein elektronisches Lastbremsventil des Schienenfahrzeugs gebildet (Massenbestimmung 41), mittels des Lastbremsventils werden auf Basis entsprechender Massensignale Bremsdrücke geregelt (Bremsdruckregelung 42).

Weiterhin werden die Abstände als Regelgrößen einer Einrichtung zur Niveauregulierung des Schienenfahrzeugs eingesetzt. Die Recheneinheit 30 ist deshalb signalleitend mit einem Fahr- und Bremsregler des Schienenfahrzeugs verbunden, an welchen entsprechende Abstandsinformationen übertragen werden und welcher über ein z.B. in Fig. 2 gezeigtes Luftfederventil 33 die Niveauregulierung regelt (Wagenkastenniveauregelung 43).

Auf dem Gestänge 13 ist, wie in Fig. 2 dargestellt, ein als piezoelektrischer Sensor ausgeführter Beschleunigungssensor 37 vorgesehen.

Mittels des Beschleunigungssensors 37 werden Beschleunigungen des Gestänges 13 gemessen (zweite Messungen 39) und entsprechende Beschleunigungssignale an die Recheneinheit 30 übertragen.

Aus den Beschleunigungen bzw. Beschleunigungssignalen werden, wie im Zusammenhang mit Fig. 2 beschrieben, Abstandsanteile zwischen dem Wagenkasten 4 und dem Fahrwerk 5, bei welchen es sich im Wesentlichen um Normalabstände handelt, ermittelt, um welche die mittels dieser beispielhaften Ausführungsvariante eines erfindungsgemäßen Verfahrens bestimmten Abstände korrigiert werden.

Die in Fig. 3 gezeigte, beispielhafte Ausführungsvariante eines erfindungsgemäßen Verfahrens wird laufend während eines Betriebs des Schienenfahrzeugs ausgeführt. Zwischen- und Ergebnisdaten (z.B. ermittelte Abstände und/oder Massen) werden laufend in der Recheneinheit 30 gespeichert und können als Ausgangswerte für einen neuen Verfahrensdurchlauf eingesetzt werden.

### Liste der Bezeichnungen

- 1: Erster Wagen
- 2: Zweiter Wagen
- 3: Dritter Wagen
- 4: Wagenkasten
- 5: Fahrwerk
- 6: Erstes Räderpaar
- 7: Zweites Räderpaar
- 8: Fahrwerksrahmen
- 9: Sekundärfederanordnung
- 10: Erster Wagenübergang
- 11: Zweiter Wagenübergang
- 12: Wagenhochachse
- 13: Gestänge
- 14: Stange
- 15: Erster Hebel
- 16: Zweiter Hebel
- 17: Inkrementalgeber
- 18: Erste Konsole
- 19: Zweite Konsole
- 20: Dritte Konsole
- 21: Bodenplatte
- 22: Erstes Gelenk
- 23: Zweites Gelenk
- 24: Drittes Gelenk
- 25: Viertes Gelenk
- 26: Maßverkörperung
- 27: Erste Leitung
- 28: Zweite Leitung
- 29: Dritte Leitung
- 30: Recheneinheit
- 31: Luftfederbalg
- 32: Luftfedergestänge
- 33: Luftfederventil
- 34: Gewindeabschnitt
- 35: Erste Mutter
- 36: Zweite Mutter
- 37: Beschleunigungssensor
- 38: Erste Messung
- 39: Zweite Messung
- 40: Abstandsermittlung
- 41: Massenbestimmung
- 42: Bremsdruckregelung
- 43: Wagenkastenniveauregelung

## Patentansprüche

1. Vorrichtung zur Bestimmung von Abständen zwischen zumindest einem Wagenkasten und zumindest einem Fahrwerk eines Fahrzeugs, insbesondere eines Schienenfahrzeugs,
wobei die Vorrichtung zumindest ein Gestänge und zumindest einen Inkrementalgeber aufweist, und wobei mit dem zumindest einen Wagenkasten (4) und dem zumindest einen Fahrwerk (5) das zumindest eine Gestänge (13) verbindbar ist, wobei das zumindest eine Gestänge (13) eine Maßverkörperung (26) aufweist und wobei mit dem zumindest einen Wagenkasten (4) oder mit dem zumindest einen Fahrwerk (5) der zumindest eine Inkrementalgeber (17) verbindbar ist, welcher zu der Maßverkörperung (26) hin ausgerichtet ist und mit zumindest einer Recheneinheit (30), welche mit dem zumindest einen Wagenkasten (4) oder mit dem zumindest einen Fahrwerk (5) verbindbar ist, verbunden ist, **dadurch gekennzeichnet, dass** mit dem zumindest einen Gestänge (13) und mit der zumindest einen Recheneinheit (30) zumindest ein Beschleunigungssensor (37) verbunden ist.

2. Vorrichtung nach Anspruch 1, **dadurch gekennzeichnet, dass** das zumindest eine Gestänge (13) ausschließlich zur Bestimmung von Abständen vorgesehen ist.

3. Vorrichtung nach Anspruch 1, **dadurch gekennzeichnet, dass** das zumindest eine Gestänge (13) als Luftfedergestänge (32) ausgebildet ist.

4. Vorrichtung nach einem der Ansprüche 1 bis 3, **dadurch gekennzeichnet, dass** das zumindest eine Gestänge (13) gelenkig und schwenkbar mit dem zumindest einen Wagenkasten (4) und dem zumindest einen Fahrwerk (5) verbindbar ist.

5. Vorrichtung nach einem der Ansprüche 1 bis 4, **dadurch gekennzeichnet, dass** der zumindest eine Inkrementalgeber (17) als induktiver Sensor ausgebildet ist.

6. Vorrichtung nach einem der Ansprüche 1 bis 4, **dadurch gekennzeichnet, dass** der zumindest eine Inkrementalgeber (17) als optoelektronischer Sensor ausgebildet ist.

7. Schienenfahrzeug mit einer Vorrichtung nach einem der Ansprüche 1 bis 6.

8. Verfahren zur Bestimmung von Abständen mittels der Vorrichtung nach einem der Ansprüche 1 bis 6, **dadurch gekennzeichnet, dass** mittels des zumindest einen Inkrementalgebers (17) erste Messungen (38) durchgeführt werden, entsprechende Messsignale an die zumindest eine Recheneinheit (30) übertragen werden und aus den Messsignalen Abstände zwischen dem zumindest einen Wagenkasten (4) und dem zumindest einen Fahrwerk (5) ermittelt werden.

9. Verfahren nach Anspruch 8, **dadurch gekennzeichnet, dass** in der zumindest einen Recheneinheit (30) aus den Abständen sowie einer Steifigkeit einer Federanordnung des Fahrzeugs Massen des Fahrzeugs bestimmt werden.

10. Verfahren nach Anspruch 8 oder 9, **dadurch gekennzeichnet, dass** mittels der in der zumindest einen Recheneinheit (30) ermittelten Abstände eine Niveauregulierung des Fahrzeugs durchgeführt wird.

11. Verfahren nach einem der Ansprüche 8 bis 10, **dadurch gekennzeichnet, dass** mittels des zumindest einen Beschleunigungssensors (37) Beschleunigungen des zumindest einen Gestänges (13) gemessen werden, Beschleunigungssignale an die zumindest eine Recheneinheit (30) übertragen werden und aus den Beschleunigungen Abstandsanteile ermittelt werden, um welche die ermittelten Abstände korrigiert werden.

## Claims

1. Device for determining distances between at least one vehicle body and at least one chassis of a vehicle, in particular of a rail vehicle,
wherein the device has at least one system of rods and at least one incremental encoder and wherein a system of rods (13) can be connected to the at least one vehicle body (4) and the at least one chassis (5), wherein the at least one system of rods (13) has a solid measure (26) and wherein the at least one incremental encoder (17) can be connected to the at least one vehicle body (4) or to the at least one chassis (5), said incremental encoder being aligned towards the solid measure (26) and being connected to at least one computer unit (30), which can be connected to the at least one vehicle body (4) or to the at least one chassis (5), **characterised in that** at least one acceleration sensor (37) is connected to the at least one system of rods (13) and to the at least one computer unit (30).

2. Device according to claim 1, **characterised in that** the at least one system of rods (13) is provided exclusively to determine distances.

3. Device according to claim 1, **characterised in that** the at least one system of rods (13) is embodied as a pneumatic spring system of rods (32).

4. Device according to one of claims 1 to 3, **characterised in that** the at least one system of rods (13) can be connected in a hinged and pivotable manner to the at least one vehicle body (4) and the at least one chassis (5).

5. Device according to one of claims 1 to 4, **characterised in that** the at least one incremental encoder (17) is embodied as an inductive sensor.

6. Device according to one of claims 1 to 4, **characterised in that** the at least one incremental encoder (17) is embodied as an optoelectronic sensor.

7. Rail vehicle having a device according to one of claims 1 to 6.

8. Method for determining distances by means of the device according to one of claims 1 to 6, **characterised in that** first measurements (38) are carried out by means of the at least one incremental encoder (17), corresponding measurement signals are transmitted to the at least one computer unit (30) and distances between the at least one vehicle body (4) and the at least one chassis (5) are determined from the measurement signals.

9. Method according to claim 8, **characterised in that** measurements of the vehicle are determined from the distances and a rigidity of a spring arrangement in the at least one computer unit (30).

10. Method according to claim 8 or 9, **characterised in that** a level regulation of the vehicle is carried out by means of the distances determined in the at least one computer unit (30).

11. Method according to one of claims 8 to 10, **characterised in that** accelerations of the at least one system of rods (13) are measured by means of the at least one acceleration sensor (37), acceleration signals are transmitted to the at least one computer unit (30) and distance components, by which the determined distances are corrected, are determined from the accelerations.

## Revendications

1. Dispositif servant à définir des espacements entre au moins une caisse de véhicule et au moins un train de roulement d'un véhicule, plus particulièrement d'un véhicule sur rails, dans lequel le dispositif présente au moins une tige et au moins un codeur incrémental, et dans lequel l'u moins une tige (13) peut être reliée à l'au moins une caisse de véhicule (4) et l'au moins un train de roulement (5), dans lequel l'au moins une tige (13) présente une mesure matérialisée (26) et dans lequel l'au moins un codeur incrémental (17) peut être relié à l'au moins une caisse de véhicule (4) ou à l'au moins un train de roulement (5), lequel est dirigé en direction de la mesure matérialisée (26) et est relié à au moins une unité de calcul (30), laquelle peut être reliée à l'au moins une caisse de véhicule (4) ou à l'au moins un train de roulement (5), **caractérisé en ce qu'**au moins un capteur d'accélération (37) est relié à l'au moins une tige (13) et à l'au moins une unité de calcul (30).

2. Dispositif selon la revendication 1, **caractérisé en ce que** l'au moins une tige (13) est prévue exclusivement pour définir les espacements.

3. Dispositif selon la revendication 1, **caractérisé en ce que** l'au moins une tige (13) est conçue comme une tige à ressort pneumatique (32).

4. Dispositif selon l'une des revendications 1 à 3, **caractérisé en ce que** l'au moins une tige (13) peut être reliée de façon articulée et pivotante à l'au moins une caisse de véhicule (4) et à l'au moins un train de roulement (5).

5. Dispositif selon l'une des revendications 1 à 4, **caractérisé en ce que** l'au moins un codeur incrémental (17) est conçu comme un capteur inductif.

6. Dispositif selon l'une des revendications 1 à 4, **caractérisé en ce que** l'au moins un codeur incrémental (17) est conçu comme un capteur optoélectronique.

7. Véhicule sur rails avec un dispositif selon l'une des revendications 1 à 6.

8. Procédé servant à définir des espacements au moyen du dispositif selon l'une des revendications 1 à 6, **caractérisé en ce qu'**au moyen du au moins un codeur incrémental (17) des premières mesures (38) sont effectuées, des signaux de mesure correspondants sont transmis à l'au moins une unité de calcul (30) et à partir des signaux de mesure ont été déterminés des espacements entre l'au moins une caisse de véhicule (4) et l'au moins un train de roulement (5).

9. Procédé selon la revendication 8, **caractérisé en ce que** dans l'au moins une unité de calcul (30) sont définies des masses du véhicule à partir des espacements ainsi que d'une raideur d'un dispositif à ressort du véhicule.

10. Procédé selon la revendication 8 ou 9, **caractérisé en ce qu'**au moyen des espacements déterminés dans l'au moins une unité de calcul (30) est effectué un réglage du niveau du véhicule.

11. Procédé selon l'une des revendications 8 à 10, **caractérisé en ce qu'**au moyen du au moins un capteur d'accélération (37), sont mesurées des accélérations de l'au moins une tige (13), des signaux d'accélération sont transmis à l'au moins une unité de calcul (30) et à partir des accélérations sont déterminées des proportions d'espacement, en fonction desquelles sont corrigés les espacements déterminés.
